# EUROPÄISCHE PATENTSCHRIFT

(11) **EP 3 545 533 B1**
(45) Veröffentlichungstag und Bekanntmachung des Hinweises auf die Patenterteilung: **06.09.2023**
(21) Anmeldenummer: 17805163.7
(22) Anmeldetag: 21.11.2017
(51) Int. Cl.: G21F 9/28, G21F 9/30, G21D 1/00

(54) **VERFAHREN ZUM DEMONTIEREN EINES DAMPFERZEUGERS ODER WÄRMETAUSCHERS EINES KERNKRAFTWERKS**
PROCESS FOR REMOVAL OF A STEAM GENERATOR OR HEAT EXCHANGER OF A NUCLEAR POWER STATION
PROCÉDÉ POUR LE DÉMARRAGE D'UN GÉNÉRATEUR DE VAPEUR OU D'UN ÉCHANGEUR DE CHALEUR D'UNE CENTRALE NUCLÉAIRE

(30) Priorität: 22.11.2016 DE 102016122513
(43) Veröffentlichungstag der Anmeldung: 02.10.2019
(73) Patentinhaber: Framatome GmbH, 91052 Erlangen (DE)
(72) Erfinder: BECK, Jens, 90587 Veitsbronn (DE); KRÄMER, Georg, 91346 Wiesenttal (DE); GERNER, Peter, 91056 Erlangen (DE)
(74) Vertreter: Lavoix
(86) Internationale Anmeldenummer: PCT/EP2017/079961
(87) Internationale Veröffentlichungsnummer: WO 2018/095925

(56) Entgegenhaltungen:
- EP-A1- 0 192 543
- DE-A1- 10 137 284
- DE-A1- 19 753 124
- FR-A1- 3 002 363
- JP-A- H03 113 398

## Beschreibung

Die Erfindung betrifft ein Verfahren zum Demontieren eines Dampferzeugers oder Wärmetauschers eines Kernkraftwerks.

Derartige Dampferzeuger oder Wärmetauscherweisen eine Vielzahl von an ihrer Rohrinnenseite kontaminierten Primärkreislauf-Rohren auf, wobei ein oder mehrere der Rohre an beiden Rohrenden mit einem Stopfen verschlossen sind.

Im Kernreaktor eines Kernkraftwerks befindet sich der Reaktorkern, der aus Brennelementen besteht, in denen Kernenergie durch kontrollierte Kernspaltung und radioaktiven Zerfall freigesetzt und in Wärme umgewandelt wird. Mit dieser Wärme wird ein Kühlmittel erhitzt, das durch den Reaktor gepumpt wird und dadurch die Energie aus dem Reaktor abtransportiert. Das Kühlmittel wird anschließend einem Dampferzeuger zugeführt, wobei durch den erzeugten Dampf die Turbinen des Kraftwerks angetrieben werden.

Der Dampferzeuger überträgt die Wärme des Reaktorkühlmittels an den WasserDampf-Kreislauf. Als Rohrbündel-Wärmetauscher erzeugen diese aus Speisewasser Frischdampf zum Antrieb der Turbinen.

Über Eintritts- und Austrittsstutzen ist die Sammelkammer mit den Hauptkühlmittelleitungen des Reaktorkühlsystems verbunden. Aus der Sammelkammer strömt das Reaktorkühlmittel unter Wärmeabgabe durch die Rohre zur Austrittskammer, von wo aus es der Hauptkühl-mittelpumpe zugeleitet wird.

Das Rohrbündel ist mit dem Rohrboden der Dampferzeuger verbunden. Die Rohre eines Dampferzeugers können bis zu 20 Meter lang sein. Das eintretende Speisewasser strömt im Naturumlauf im Rohrbündel nach oben. Im Dampfdom über dem Rohrbündel wird die Restdampfnässe abgeschieden, bevor der getrocknete Dampf über den Austrittsstutzen abgeleitet wird.

Die Innenoberflächen der Rohre der Dampferzeuger in Kernkraftwerken werden beim Betrieb der Anlage kontaminiert. Durch regelmäßige Prüfungen der Rohre wird deren Integrität sichergestellt. Sollte bei einer Prüfung festgestellt werden, dass eine Schädigung, wie beispielsweise eine Wandstärkenminderung, vorliegt, wird dieses Rohr sicherheitshalber beidseitig, am Eintrittsrohrende sowie am Austrittsrohrende, mit Stopfen im Rohrbodenbereich verschlossen. Dies hat zur Folge, dass auch die Oberflächenkontamination mit eingeschlossen wird.

Bei einem Rückbau des Dampferzeugers werden die Rohre in einem vorgeordneten Schritt, beispielsweise durch mechanische oder chemische Verfahren, dekontaminiert. Da die zuvor durch die Stopfen verschlossenen Rohre einer solchen Dekontamination nicht zugänglich sind, kommt es zu dem Problem, dass diese Rohre nicht ohne zusätzliche Schritte weiterverarbeitet bzw. dem Rückbau zugeführt werden können.

Die DE 197 53 124 A1 und die DE 101 37 284 A1 beschreiben Verfahren zum Zerlegen bzw. Entsorgen von Einbauten, insbesondere von radioaktiv kontaminierten Rohrbündeln aus Kernkraftwerken. Die gezeigten Verfahren basieren darauf, dass der die Rohrbündel enthaltende Behälter bzw. das die Rohrbündel enthaltende Gehäuse mit einer aushärtbaren bzw. verfestigbaren Masse vollständig gefüllt wird. Nach dem Aushärten kann anschließend die gesamte Einheit zerlegt werden.

JP H-03 113398 A zeigt ein Verfahren zum Zersägen von radioaktiv kontaminierten Wärmetauschern, bei dem ein Füllmaterial in das Innere des Wärmetauschers eingebracht und verfestigt wird. Des Füllmaterial verbleibt zum Aushärten mehrere Tage innerhalb des Wärmeaustauschers. In dieser Zeit werden die Öffnungen des Wärmeaustauschers mit Stopfen verschlossen. Als Füllmaterial wird Mörtel genutzt.

Aus der EP 0 192 543 A1 ist ein Verfahren zum Verpacken von radioaktiven oder toxischen Abfall bekannt, in dem der Abfall in eine polymerisierte Mischung eingebettet wird. Die polymerisierte Mischung umfasst zumindest ein Epoxidharz, zumindest einen Härter für das Epoxidharz und Pech. Das Pech dient sowohl als Kompatibilisator für das Epoxidharz als auch zum Einstellen des Fließverhaltens der Mischung. Als Härter werden bevorzugt Verbindungen mit freien Aminogruppen zum Vernetzen des Epoxidharzes eingesetzt.

FR 3 002 363 A1 beschreibt ein Verfahren zur Dekontamination von Rohren aus Dampfgeneratoren aus Kernkraftwerken, in dem die Rohre in Teile zerschnitten und anschließend die kontaminierte Oberflächenschicht innerhalb des Rohrs durch Laserablation abgetragen wird.

Es ist daher Aufgabe der Erfindung, ein Verfahren anzugeben, durch welches vermieden wird, dass Kontaminationen, die an den Innenoberflächen der Rohre vorliegen, beim Zerlegen des Dampferzeugers oder Wärmetauschers nicht aus den Rohren austreten können.

Diese Aufgabe wird gelöst durch ein Verfahren zum Demontieren eines Dampferzeugers oder Wärmetauschers eines Kernkraftwerks mit den Merkmalen gemäß Anspruch 1. Vorteilhafte Ausgestaltungen und Weiterbildungen sind in den jeweils abhängigen Ansprüchen angegeben.

Das erfindungsgemäße Verfahren umfasst folgende Schritte:
a) Öffnen eines oder beider Enden jedes verschlossenen Rohres durch Einbringen einer Öffnung in den jeweiligen Stopfen oder durch Entfernen des jeweiligen Stopfens;
b) Einbringen eines viskosen und im Rohr aushärtenden Polymers in das oder die zunächst verschlossenen und nunmehr geöffneten Rohre, wobei das Polymer das Rohr zumindest im Bereich der Rohrenden über den gesamten Rohrquerschnitt ausfüllt und im ausgefüllten Abschnitt Kontaminationen im Rohr fixiert;
c) Abtrennen der mit Polymer versehenen Rohre nach dem Aushärten des Polymers, wobei die abgetrennten Rohre durch das ausgehärtete Polymer verschlossen sind,
d) Aussortieren der mit dem Polymer versehenen und abgetrennten Rohre.

Das Polymer wird mittels einer oder mehrerer Leitungen eingebracht, wobei eine Leitung durch ein geöffnetes Rohrende oder je eine Leitung durch je ein geöffnetes Rohrende eines Rohres in das Rohr eingeführt wird. Bei der Leitung kann es sich beispielsweise um einen Schlauch oder ein flexibles Rohr handeln.

Durch das Einbringen eines Polymers, welches in den Rohren aushärtet, wird die lose Kontamination im Rohr gebunden und kann, wenn das Rohr abgetrennt wird, nicht austreten.

Es hat sich weitgehend durchgesetzt, dass bei den Außerbetriebnahmen von Kernkraftwerken als letzter Schritt vor der Abschaltung noch eine sogenannte "Full System Decontamination" durchgeführt wird. Da radioaktiver Abfall sehr teuer ist, muss darauf geachtet werden, dass möglichst wenig "hochradioaktiver Abfall" anfällt. Die nicht mit Stopfen versehenen, offenen Rohre und die mit dem Polymer gefüllten, geschlossenen Rohre weisen unterschiedliche Abfallkategorien auf, so dass die mit dem Polymer gefüllten, geschlossenen Rohre aussortiert und getrennt von den nicht mit Stopfen versehenen, offenen Rohren entsorgt werden.

Die Vorteile der Erfindung liegen insbesondere darin, dass durch das erfindungsgemäße Verfahren jegliche chemische oder mechanische Behandlung der kontaminierten Rohre vermieden werden kann. Eine derartige Behandlung der Rohre birgt aufgrund der Vorschädigung der Rohre stets das Risiko, dass die Rohre zu Bruch gehen und dadurch Kontamination auf die Sekundärseite verschleppt wird. Eine derartige Verschleppung von Kontamination gilt es in jedem Fall zu vermeiden, da die Sekundärseite grundsätzlich kontaminationsfrei ist.

Ferner ist es ein Vorteil der Erfindung, dass das Verfahren zum einen wesentlich kostengünstiger als bekannte, alternative Verfahren ist und zum anderen eine sehr hohe Sicherheit mit sich bringt.

Gemäß einer vorteilhaften Weiterbildung der Erfindung ist vorgesehen, dass ein vernetzendes Polymer, insbesondere ein durch Polyaddition vernetzendes Polymer, beispielsweise bestehend aus oder umfassend Silikon und/oder Polyurethan und/oder Epoxidharz, verwendet wird.

Gemäß einer Ausführungsvariante der Erfindung kann vorgesehen sein, dass der Rohrinnenraum vollständig mit dem Polymer gefüllt wird. Ferner kann gemäß einer alternativen Ausführungsvariante der Erfindung vorgesehen sein, dass der Rohrinnenraum im Bereich der beiden Rohrenden, beispielsweise vom Rohrende aus bis 0,5 Meter über den Rohrboden hinaus, mit dem Polymer gefüllt wird.

Unter "vollständig" kann verstanden werden, dass der vollständige Innenraum des Rohrs von einem Rohrende zum anderen mit dem Polymer gefüllt wird. Mit anderen Worten: Es sollen keine Hohlräume oder freie Bereiche im Rohr verbleiben. Unter "im Bereich der Rohrenden" kann verstanden werden, dass sich das Polymer nach dem Einbringen an beiden Enden vom Rohrende aus, beispielsweise bis 0,5 Meter über den Rohrboden hinaus, in das Rohr hinein erstreckt. Mit anderen Worten: Es verbleibt ein Hohlraum oder freier Bereich zwischen den beiden gefüllten Bereichen.

Um die Leitung oder Leitungen dem oder den Rohrenden zuzuführen, können diese über die Mannlöcher oder die Loop-Leitungen dem Dampferzeuger oder Wärmetauscher zugeführt werden.

Derartige Leitungen sollten einen möglichst großen Innendurchmesser aufweisen, damit der Reibwiderstand beim Durchpressen des zu diesem Zeitpunkt noch niedrig viskosen Polymers möglichst gering ist.

Das Polymer wird insbesondere mittels Druck eingeführt, wobei der Druck vorzugsweise durch ein Druckaggregat, welches mit dem Polymermischer verbunden ist, erzeugt wird. Der an dem Aggregat anstehende Druck kann zwischen 1 bar Überdruck und 150 bar Überdruck variieren. Dies ist abhängig von den Gegebenheiten, wie beispielsweise Durchmesser und/oder Länge des Rohres sowie der Leitung.

Gemäß einer Ausführungsvariante sind die Rohre U-förmige Rohre, deren beide Enden in einem Rohrboden enden, wobei eine Leitung durch eines der geöffneten Rohrenden eingeführt, danach bis zum Scheitelpunkt des U-förmigen Rohres geführt und anschließend das Polymer durch die Leitung in das Rohr gepresst wird, wobei die Leitung beim Einpressen des Polymers aus dem Rohr zurückgezogen wird, bis der Innenraum der entsprechenden Hälfte des Rohres mit Polymer gefüllt ist.

Gemäß einer alternativen Ausführungsvariante sind die Rohre U-förmige Rohre, deren beide Enden in einem Rohrboden enden, wobei eine Leitung durch eines der geöffneten Rohrenden in das Rohr eingeführt, danach etwa 0,5 Meter bis über den Rohrboden hinaus in das Rohr geführt und anschließend das Polymer durch die Leitung in das Rohr gepresst wird, wobei die Leitung beim Einpressen des Polymers aus dem Rohr zurückgezogen wird, bis der entsprechende Abschnitt des Rohres mit Polymer gefüllt ist.

Bei beiden Ausführungsvarianten kann gleichzeitig oder im Nachgang zum Einpressen des Polymers in die entsprechende Hälfte oder in den entsprechenden Abschnitt des U-förmigen Rohrs die zweite Hälfte oder der zweite Abschnitt des Rohres durch das zweite geöffnete Rohrende in analoger Weise mit Polymer gefüllt werden.

Gemäß einer Weiterbildung der Erfindung ist vorgesehen, dass alle nicht mit Stopfen verschlossenen Rohre vor dem Öffnen der verschlossenen Rohre, insbesondere mit mechanischen oder chemischen Reinigungsverfahren, beispielsweise durch abrasive Verfahren, wie Strahlverfahren, oder durch Spülverfahren mit Lösungsmitteln, dekontaminiert werden.

Die Öffnungen können mittels Bohren, insbesondere mittels eines zweistufigen Bohrverfahrens, in die Stopfen eingebracht werden, um lose Teile zu verhindern. Auch eine Einbringung mittels Fräsen oder Erodieren oder anderer geeigneter Verfahren ist möglich. Die Öffnungen können beispielsweise einen Minimaldurchmesser von etwa 5mm aufweisen. Der Maximaldurchmesser entspricht vorzugsweise in etwa dem Innendurchmesser des Rohres, d.h. der Stopfen wird komplett entfernt. Die Innendurchmesser der Rohre können einen Durchmesser von in etwa 10 bis 20mm aufweisen.

Beim Abtrennen der mit dem Polymer versehenen Rohre werden vorzugsweise ebenfalls die nicht mit Stopfen versehenen offenen Rohre abgetrennt und anschließend die mit Polymer versehenen Rohre aussortiert.

Eine bevorzugte und zweckmäßige Weiterbildung der Erfindung sieht vor, dass die mit Polymer versehenen Rohre und/oder die die nicht mit Stopfen versehenen, offenen Rohre direkt am oder nahe des Rohrbodens oder auf Höhe des Rohrbodens, insbesondere durch Absägen abgetrennt werden, wobei entlang einer vorgesehenen Trennlinie abgetrennt wird, welche vorzugsweise senkrecht zu den vertikal stehenden Rohren vorgesehen ist. Alternativ ist es auch möglich die Rohre im liegenden Zustand abzutrennen. Die Trennlinie kann beispielsweise direkt am oder nahe des Rohrbodens vorgesehen sein. Die Trennlinie kann jedoch auch durch den Rohrboden hindurch vorgesehen sein.

Bevorzugt werden die vollständig mit Polymer gefüllten Rohre, vorzugsweise nach dem Abtrennen, in mehrere Stücke segmentiert, wobei das Segmentieren mittels Schneiden und/oder Sägen und/oder thermischer Trennverfahren durchgeführt wird. Ein solches Segmentieren erleichtert die Weiterbehandlung bzw. den Transport der Rohre, da diese im nicht-segmentierten Zustand mit bis zu 20 Metern sehr lang sind.

Es kann vorgesehen sein, dass die abgetrennten und aussortierten mit dem Polymer versehenen Rohre als radioaktiver Abfall behandelt und/oder entsorgt werden.

Alternativ oder additiv kann vorgesehen sein, dass die nicht mit Stopfen versehenen offenen Rohre nach der Demontage als weniger radioaktiv belasteter Abfall oder nicht radioaktiv belasteter Abfall behandelt und/oder entsorgt werden.

Die abgetrennten und aussortierten mit dem Polymer versehenen Rohre sowie die nicht mit Stopfen versehenen offenen Rohre können unterschiedlichen Abfallkategorien zugeordnet und getrennt entsorgt werden.

Die Erfindung wird nachstehend auch hinsichtlich weiterer Merkmale und Vorteile anhand der Beschreibung von Ausführungsbeispielen und unter Bezugnahme auf die beiliegende Zeichnung näher erläutert.

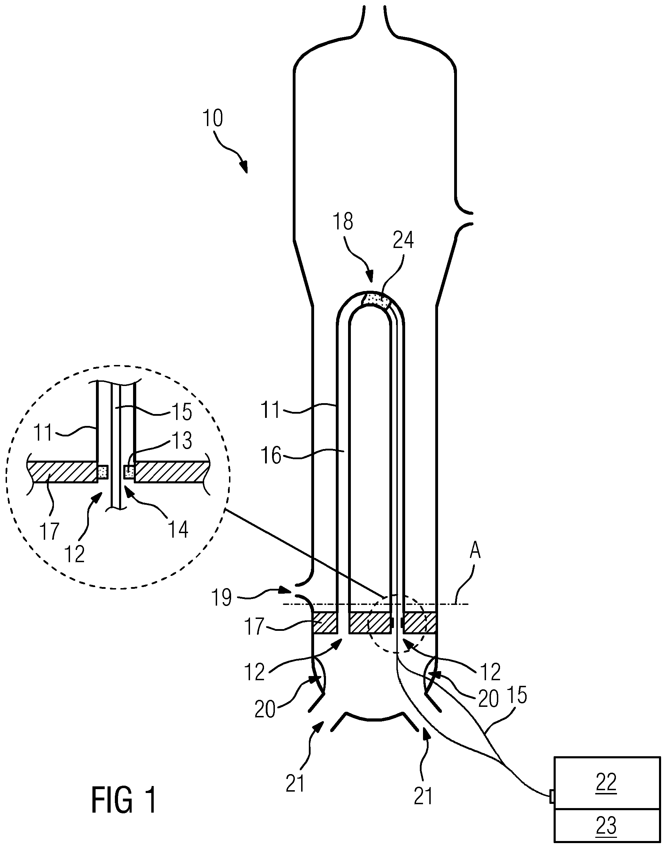

FIG 1 zeigt eine vereinfachte, schematische Darstellung eines Dampferzeugers 10, an welchem das erfindungsgemäße Verfahren zum Demontieren eines Dampferzeugers 10 durchgeführt werden kann. Zur besseren Übersicht wird in dem Dampferzeuger lediglich ein vergrößert dargestelltes Primärkreislaufrohr 11 gezeigt. In der Regel umfasst ein Dampferzeuger jedoch eine Vielzahl von Rohren 11, beispielsweise mehrere tausend solcher Rohre 11.

FIG 1 zeigt einen Dampferzeuger 10 eines Kernkraftwerkes (nicht dargestellt), wobei der Dampferzeuger 10 eine Vielzahl von an ihrer Rohrinnenseite kontaminierten Primärkreislauf-Rohren 11 aufweist (FIG 1 zeigt exemplarisch lediglich ein solches Rohr 11), wobei ein oder mehrere der Rohre 11 an beiden Rohrenden 12 mit einem Stopfen 13 verschlossen waren. Im Grundzustand, in dem das Verfahren ansetzt, sind die Rohrenden 12 noch mit einem Stopfen 13 verschlossen.

Bei dem erfindungsgemäßen Verfahren wird zunächst eines oder beide Enden 12 jedes verschlossenen Rohres 11 durch Einbringen einer Öffnung 14 in den jeweiligen Stopfen 13 oder durch Entfernen des jeweiligen Stopfens 13 geöffnet. FIG 1 zeigt ein Rohr 11, bei dem in beide Enden 12 geöffnet sind, am rechtsgelegenen Ende 12 durch Einbringen einer Öffnung 14 in den Stopfen 13, am linksgelegenen Ende 12 durch Entfernen des Stopfens 13.

Die Öffnungen 14 werden bevorzugt mittels Bohren, insbesondere mittels eines zweistufigen Bohrverfahrens, in die Stopfen 13 eingebracht, um lose Teile zu verhindern. Anstatt des Bohrens sind jedoch auch Fräsverfahren oder Erodierverfahren möglich.

Bevorzugt werden alle nicht mit Stopfen 13 verschlossenen Rohre 11 vor dem Öffnen der verschlossenen Rohre 11 mit mechanischen oder chemischen Reinigungsverfahren, beispielsweise durch abrasive Verfahren, wie Strahlverfahren, oder durch Spülverfahren mit Lösungsmitteln, dekontaminiert.

Nach dem Öffnen eines oder beider Enden 12 jedes verschlossenen Rohres 11 wird ein viskoses und im Rohr 11 aushärtendes Polymer 24 in das oder die zunächst verschlossenen und nunmehr geöffneten Rohre 11 eingebracht. Das Polymer 24 füllt das Rohr 11 zumindest im Bereich der Rohrenden 12 über den gesamten Rohrquerschnitt aus und fixiert im ausgefüllten Abschnitt Kontaminationen im Rohr 11.

Als Polymer wird ein durch Polyaddition vernetzendes Polymer 24, beispielsweise bestehend aus oder umfassend Silikon und/oder Polyurethan und/oder Epoxidharz, verwendet.

Nachfolgend sollen zwei Varianten zum Einbringen des Polymers aufgezeigt werden:
Gemäß der ersten Variante wird der Rohrinnenraum 16 vollständig mit dem Polymer 24 gefüllt. Hierbei wird das Polymer 24 mittels einer als Schlauch ausgebildeten Leitung 15 eingebracht, wobei der Schlauch 15 durch ein geöffnetes Rohrende 12 eingeführt wird.

Um den Schlauch 15 dem Rohrende 12 zuzuführen, kann dieser über das Mannloch 20 und/oder die Loop-Leitungen 21 dem Dampferzeuger 10 zugeführt werden. Das Polymer 24 wird insbesondere mittels Druck eingeführt, wobei der Druck durch ein Druckaggregat 23, welches mit dem Polymermischer 22 verbunden ist, erzeugt wird.

Die Rohre 11 des Dampferzeugers 10 sind U-förmige Rohre 11, deren beide Enden 12 in einem Rohrboden 17 enden. Der Schlauch 15 wird durch eines der geöffneten Rohrenden 12, in FIG 1 durch das rechte Rohrende 12 eingeführt und danach bis zum Scheitelpunkt 18 des U-förmigen Rohres 11 geführt. Anschließend wird das Polymer 24 durch den Schlauch 15 in das Rohr 11 gepresst, wobei der Schlauch 15 beim Einpressen des Polymers 24 aus dem Rohr 11 zurückgezogen wird, bis der Innenraum 16 der entsprechenden Hälfte des Rohres 11 mit Polymer 24 gefüllt ist. FIG 1 zeigt den Anfang des Einpressprozesses. Es ist bereits ein Teil des Rohres 11 mit Polymer versehen, und der Schlauch 15 ist bereits ein Stück aus dem Rohr 11 zurückgezogen.

Gleichzeitig oder im Nachgang, in FIG 1 im Nachgang, zum Einpressen des Polymers 24 in die entsprechende Hälfte des U-förmigen Rohrs wird die zweite Hälfte des Rohres 11 durch das zweite geöffnete Rohrende 12 in analoger Weise mit Polymer 24 gefüllt.

Gemäß der zweiten, in FIG 1 nicht dargestellten, Variante wird der Rohrinnenraum 16 im Bereich der beiden Rohrenden 12, beispielsweise auf einer Länge von etwa 0,5 Metern, gemessen ab dem oberen Ende des Rohrbodens, mit dem Polymer 24 gefüllt. Hierbei wird Polymer 24 mittels zweier Schläuche 15 eingebracht, wobei je ein Schlauch 15 durch je ein geöffnetes Rohrende 12 eines Rohres 11 in das Rohr 11 eingeführt wird.

Die Rohre 11 sind U-förmige Rohre 11, deren beide Enden 12 in einem Rohrboden 17 enden, wobei ein Schlauch 15 durch eines der geöffneten Rohrenden 12 in das Rohr 11 eingeführt und danach etwa 0,5 Meter, gemessen ab dem oberen Ende des Rohrbodens, in das Rohr 11 geführt wird. Anschließend wird das Polymer 24 durch den Schlauch 15 in das Rohr 11 gepresst, wobei der Schlauch 15 beim Einpressen des Polymers 24 aus dem Rohr 11 zurückgezogen wird, bis der entsprechende Abschnitt des Rohres 11 mit Polymer 24 gefüllt ist.

Gleichzeitig oder im Nachgang zum Einpressen des Polymers 24 in den entsprechenden Abschnitt des U-förmigen Rohrs 11 wird der zweite Abschnitt des Rohres 11 durch das zweite geöffnete Rohrende 12 in analoger Weise mit Polymer 24 gefüllt.

Nach dem Aushärten des Polymers 24 werden die mit Polymer 24 versehenen Rohre 11 abgetrennt. Die abgetrennten Rohre 11 sind zu diesem Zeitpunkt durch das ausgehärtete Polymer 24 verschlossen.

Beim Abtrennen der mit dem Polymer 24 versehenen Rohre 11 werden bevorzugt ebenfalls die nicht mit Stopfen 13 versehenen offenen Rohre 11 abgetrennt.

Die mit Polymer 24 versehenen Rohre 11 sowie die die nicht mit Stopfen 13 versehenen offenen Rohre 11 werden direkt am oder nahe des Rohrbodens 17 durch Absägen abgetrennt, wobei entlang einer vorgesehenen Trennlinie A abgetrennt wird, welche senkrecht zu den vertikal stehenden Rohren 11 vorgesehen ist. Alternativ kann die Trennlinie auch durch den Rohrboden hindurch vorgesehen sein (nicht dargestellt).

Die mit dem Polymer 24 versehenen und abgetrennten Rohre 11 werden anschließend aussortiert.

Die vollständig mit Polymer 24 gefüllten Rohre 11 werden nach dem Abtrennen in mehrere Stücke segmentiert, wobei das Segmentieren mittels Sägen oder anderen Trennverfahren durchgeführt wird.

Die abgetrennten und aussortierten mit dem Polymer 24 versehenen Rohre 11 werden als radioaktiver Abfall behandelt und entsorgt. Die nicht mit Stopfen 13 versehenen offenen Rohre 11 werden nach der Demontage als weniger radioaktiv belasteter Abfall oder nicht radioaktiv belasteter Abfall behandelt und entsorgt.

### Bezugszeichenliste

- 10: Dampferzeuger
- 11: Rohr
- 12: Rohrende
- 13: Stopfen
- 14: Öffnung im Stopfen
- 15: Schlauch
- 16: Innenraum
- 17: Rohrboden
- 18: Scheitelpunkt
- 19: Handloch
- 20: Mannloch
- 21: Loop-Leitung
- 22: Polymermischer
- 23: Druckaggregat
- 24: Polymer
- A: Trennlinie

## Patentansprüche

1. Verfahren zum Demontieren eines Dampferzeugers (10) oder Wärmetauschers eines Kernkraftwerks,
wobei der Dampferzeuger (10) oder Wärmetauscher eine Vielzahl von an ihrer Rohrinnenseite kontaminierten Primärkreislauf-Rohren (11) aufweist,
wobei ein oder mehrere der Rohre (11) an beiden Rohrenden (12) mit einem Stopfen (13) verschlossen sind,
umfassend folgende Schritte:
a) Öffnen eines oder beider Rohrenden (12) jedes verschlossenen Rohres (11) durch Einbringen einer Öffnung (14) in den jeweiligen Stopfen (13) oder durch Entfernen des jeweiligen Stopfens (13);
b) Einbringen eines viskosen und im Rohr (11) aushärtenden Polymers (24) in das oder die zunächst verschlossenen und nunmehr geöffneten Rohre (11), wobei das Polymer (24) das Rohr (11) zumindest im Bereich der Rohrenden (12) über den gesamten Rohrquerschnitt ausfüllt und im ausgefüllten Abschnitt Kontaminationen im Rohr (11)fixiert;
c) Abtrennen der mit Polymer (24) versehenen Rohre (11) nach dem Aushärten des Polymers (24), wobei die abgetrennten Rohre (11) durch das ausgehärtete Polymer (24) verschlossen sind,
d) Aussortieren der mit dem Polymer (24) versehenen und abgetrennten Rohre (11),
wobei das Polymer (24) mittels einer oder mehrerer Leitungen (15) eingebracht wird, wobei eine Leitung (15) durch ein geöffnetes Rohrende (12) oder je eine Leitung (15) durch je ein geöffnetes Rohrende (12) des Rohres (11) in das Rohr (11) eingeführt wird.

2. Verfahren nach Anspruch 1, **dadurch gekennzeichnet, dass** ein vernetzendes Polymer (24), insbesondere ein durch Polyaddition vernetzendes Polymer (24), beispielsweise bestehend aus oder umfassend Silikon und/oder Polyurethan und/oder Epoxidharz, verwendet wird.

3. Verfahren nach Anspruch 1 oder 2, **dadurch gekennzeichnet, dass** der Rohrinnenraum (16) vollständig mit dem Polymer (24) gefüllt wird, oder
dass der Rohrinnenraum (16) im Bereich der beiden Rohrenden (12), beispielsweise vom Rohrende aus bis 0,5 Meter über einen Rohrboden (17) hinaus, mit dem Polymer (24) gefüllt wird.

4. Verfahren nach einem der vorhergehenden Ansprüche, **dadurch gekennzeichnet, dass** die Rohre (11) U-förmige Rohre (11) sind, deren beide Enden (12) in dem Rohrboden (17) enden, wobei eine Leitung (15) durch eines der geöffneten Rohrenden (12) eingeführt, danach bis zum Scheitelpunkt (18) des U-förmigen Rohres (11) geführt und anschließend das Polymer (24) durch die Leitung (15) in das Rohr (11) gepresst wird, wobei die Leitung (15) beim Einpressen des Polymers (24) aus dem Rohr (11) zurückgezogen wird, bis der Innenraum (16) der entsprechenden Hälfte des Rohres (11) mit Polymer (24) gefüllt ist.

5. Verfahren nach einem der Ansprüche 1 bis 3, **dadurch gekennzeichnet, dass** die Rohre (11) U-förmige Rohre (11) sind, deren beide Enden (12) in dem Rohrboden (17) enden, wobei eine Leitung (15) durch eines der geöffneten Rohrenden (12) in das Rohr (11) eingeführt, danach etwa 0,5 Meter bis über den Rohrboden hinaus in das Rohr (11) geführt und anschließend das Polymer (24) durch die Leitung (15) in das Rohr (11) gepresst wird, wobei die Leitung (15) beim Einpressen des Polymers (24) aus dem Rohr (11) zurückgezogen wird, bis der entsprechende Abschnitt des Rohres (11) mit Polymer (24) gefüllt ist.

6. Verfahren nach Anspruch 4 oder 5, **dadurch gekennzeichnet, dass** gleichzeitig oder im Nachgang zum Einpressen des Polymers (24) in die entsprechende Hälfte oder in den entsprechenden Abschnitt des U-förmigen Rohrs (11) die zweite Hälfte oder der zweite Abschnitt des Rohres (11) durch das zweite geöffnete Rohrende (12) in analoger Weise mit Polymer (24) gefüllt wird.

7. Verfahren nach einem der vorhergehenden Ansprüche, **dadurch gekennzeichnet, dass** alle nicht mit Stopfen (13) verschlossenen Rohre (11) vor dem Öffnen der verschlossenen Rohre (11), insbesondere mit mechanischen oder chemischen Reinigungsverfahren, beispielsweise durch abrasive Verfahren, wie Strahlverfahren, oder durch Spülverfahren mit Lösungsmitteln, dekontaminiert werden.

8. Verfahren nach einem der vorhergehenden Ansprüche, **dadurch gekennzeichnet, dass** die Öffnungen (14) mittels Bohren, insbesondere mittels eines zweistufigen Bohrverfahrens, in die Stopfen (13) eingebracht werden, um lose Teile zu verhindern.

9. Verfahren nach einem der vorhergehenden Ansprüche, **dadurch gekennzeichnet, dass** beim Abtrennen der mit dem Polymer (24) versehenen Rohre (11) ebenfalls die nicht mit Stopfen (13) versehenen offenen Rohre (11) abgetrennt und anschließend die mit Polymer (24) versehenen Rohre (11) aussortiert werden.

10. Verfahren nach einem der Ansprüche 3 bis 11, **dadurch gekennzeichnet, dass** die mit Polymer (24) versehenen Rohre (11) und/oder die nicht mit Stopfen (13) versehenen offenen Rohre (11) direkt am oder nahe des Rohrbodens (17) oder auf Höhe des Rohrbodens (17), insbesondere durch Absägen abgetrennt werden, wobei entlang einer vorgesehenen Trennlinie (A) abgetrennt wird, welche vorzugsweise senkrecht zu den vertikal stehenden Rohren (11) vorgesehen ist.

11. Verfahren nach Anspruch 3, bei dem der Rohrinnenraum (16) vollständig mit dem Polymer (24) gefüllt wird, **dadurch gekennzeichnet, dass** die vollständig mit Polymer (24) gefüllten Rohre (11), vorzugsweise nach dem Abtrennen, in mehrere Stücke segmentiert werden, wobei das Segmentieren mittels Schneiden und/oder Sägen und/oder thermischer Trennverfahren durchgeführt wird.

12. Verfahren nach einem der vorhergehenden Ansprüche, **dadurch gekennzeichnet, dass** die abgetrennten und aussortierten mit dem Polymer (24) versehenen Rohre (11) als radioaktiver Abfall behandelt und/oder entsorgt werden, und/oder dass die nicht mit Stopfen (13) versehenen offenen Rohre (11) nach der Demontage als weniger radioaktiv belasteter Abfall oder nicht radioaktiv belasteter Abfall behandelt und/oder entsorgt werden

## Claims

1. Method for removing a steam generator (10) or heat exchanger of a nuclear power plant,
wherein the steam generator (10) or heat exchanger has a plurality of primary circuit pipes (11) contaminated on the inside of said pipes,
wherein one or more of the pipes (11) are sealed at both pipe ends (12) by means of a plug (13),
comprising the following steps:
a) opening one or both pipe ends (12) of each sealed pipe (11) by introducing an opening (14) into the plug (13) or by removing the plug (13),
b) introducing a viscous polymer (24), which cures in the pipe (11), into the one or more initially sealed and now open pipes (11), wherein the polymer (24) fills up the pipe (11) over the entire pipe cross-section at least in the region of the pipe ends (12) and fixes contamination in the pipe (11) in the filled-up section,
c) detaching the pipes (11) provided with polymer (24) after the polymer (24) has cured, wherein the detached pipes (11) are sealed by the cured polymer (24),
d) separating out the pipes (11) that have been provided with the polymer (24) and detached,
wherein the polymer (24) is introduced by means of one or more conduits (15), wherein one conduit (15) is introduced into the pipe (11) through an open pipe end (12) or one conduit (15) is introduced into the pipe (11) through each open pipe end (12) of the pipe (11).

2. Method according to claim 1, **characterised in that** a cross-linked polymer (24), in particular a polymer (24) cross-linked by means of polyaddition, for example consisting of or comprising silicone and/or polyurethane and/or epoxy resin, is used.

3. Method according to claim 1 or 2, **characterised in that** the pipe interior (16) is completely filled with the polymer (24), or
**in that** the pipe interior (16) is filled with the polymer (24) in the region of both pipe ends (12), for example from the pipe end to 0.5 metres beyond a tube plate (17).

4. Method according to any of the preceding claims, **characterised in that** the pipes (11) are U-shaped pipes (11), both ends (12) of which terminate in the tube plate (17), wherein a conduit (15) is introduced through one of the open pipe ends (12) and is then routed to the apex (18) of the U-shaped pipe (11) and the polymer (24) is subsequently forced into the pipe (11) through the conduit (15), wherein the conduit (15) is withdrawn from the pipe (11) as the polymer (24) is forced in until the interior (16) of the corresponding half of the pipe (11) is filled with polymer (24).

5. Method according to any of claims 1 to 3, **characterised in that** the pipes (11) are U-shaped pipes (11), both ends (12) of which terminate in the tube plate (17), wherein a conduit (15) is introduced into the pipe (11) through one of the open pipe ends (12) and is then routed into the pipe (11) for approximately 0.5 metres beyond the tube plate and the polymer (24) is subsequently forced into the pipe (11) through the conduit (15), wherein the conduit (15) is withdrawn from the pipe (11) as the polymer (24) is forced in until the corresponding section of the pipe (11) is filled with polymer (24).

6. Method according to claim 4 or 5, **characterised in that**, at the same time as or after the polymer (24) is forced into the corresponding half or section of the U-shaped pipe (11), the second half or section of the pipe (11) is filled with polymer (24) through the second open pipe end (12) in a similar manner.

7. Method according to any of the preceding claims, **characterised in that** all pipes (11) not sealed with plugs (13) are decontaminated before opening the sealed pipes (11), in particular by means of mechanical or chemical cleaning processes, for example by abrasive processes, such as blasting processes, or by flushing processes using solvents.

8. Method according to any of the preceding claims, **characterised in that** the openings (14) are made in the plugs (13) by drilling, in particular by means of a two-stage drilling process, in order to prevent loose parts.

9. Method according to any of the preceding claims, **characterised in that** when the pipes (11) provided with the polymer (24) are detached, the open pipes (11) not provided with plugs (13) are also detached and then the pipes (11) provided with polymer (24) are separated out.

10. Method according to any of claims 3 to 11, **characterised in that** the pipes (11) provided with polymer (24) and/or the open pipes (11) not provided with plugs (13) are detached directly at or near the tube plate (17) or at the level of the tube plate (17), in particular by sawing, wherein they are detached along a dividing line (A), which is preferably provided perpendicular to the vertical pipes (11).

11. Method according to claim 3, wherein the pipe interior (16) is completely filled with the polymer (24), **characterised in that** the pipes (11) completely filled with polymer (24) are segmented into several pieces, preferably after detaching, wherein segmenting is carried out by means of cutting and/or sawing and/or thermal separation processes.

12. Method according to any of the preceding claims, **characterised in that** the detached and separated out pipes (11) provided with the polymer (24) are treated and/or disposed of as radioactive waste, and/or **in that** the open pipes (11) not provided with plugs (13) are treated and/or disposed of as less radioactively contaminated waste or nonradioactively contaminated waste after removal

## Revendications

1. Procédé de démontage d'un générateur de vapeur (10) ou échangeur de chaleur d'une centrale nucléaire,
dans lequel le générateur de vapeur (10) ou l'échangeur de chaleur présente une pluralité de tubes de circuit primaire (11) contaminés sur leur face intérieure de tube,
dans lequel un ou plusieurs des tubes (11) sont fermés avec un bouchon (13) aux deux extrémités de tube (12),
comprenant les étapes suivantes :
a) l'ouverture d'une ou des deux extrémités de tube (12) de chaque tube (11) fermé en pratiquant une ouverture (14) dans le bouchon (13) respectif ou en enlevant le bouchon (13) respectif ;
b) l'introduction d'un polymère (24) visqueux et durcissant dans le tube (11) dans le ou les tubes (11) d'abord fermés et maintenant ouverts, dans lequel le polymère (24) remplit le tube (11) au moins dans la zone des extrémités de tube (12) sur toute la section transversale du tube et fixe des contaminations dans le tube (11) dans la section remplie ;
c) la séparation des tubes (11) munis de polymère (24) après le durcissement du polymère (24), dans lequel les tubes (11) séparés sont fermés par le polymère (24) durci,
d) le tri des tubes (11) munis du polymère (24) et séparés,
dans lequel le polymère (24) est introduit au moyen d'une ou de plusieurs conduites (15), dans lequel une conduite (15) est insérée dans le tube (11) par une extrémité de tube (12) ouverte ou respectivement une conduite (15) par respectivement une extrémité de tube (12) ouverte du tube (11).

2. Procédé selon la revendication 1, **caractérisé en ce qu'**un polymère (24) réticulant, en particulier un polymère (24) réticulant par polyaddition, par exemple constitué de ou comprenant du silicone et/ou du polyuréthane et/ou une résine époxy, est utilisé.

3. Procédé selon la revendication 1 ou 2, **caractérisé en ce que** l'espace intérieur de tube (16) est entièrement rempli du polymère (24), ou
**que** l'espace intérieur de tube (16) est rempli du polymère (24) dans la zone des deux extrémités de tube (12), par exemple depuis l'extrémité de tube jusqu'à 0,5 mètre au-delà d'un fond de tube (17).

4. Procédé selon l'une quelconque des revendications précédentes, **caractérisé en ce que** les tubes (11) sont des tubes (11) en forme de U dont les deux extrémités (12) se terminent dans le fond de tube (17), dans lequel une conduite (15) est introduite par une des extrémités de tube (12) ouvertes, puis guidée jusqu'au sommet (18) du tube (11) en forme de U et ensuite le polymère (24) est pressé dans le tube (11) à travers la conduite (15), dans lequel la conduite (15) est retirée du tube (11) lors de l'enfoncement du polymère (24) jusqu'à ce que l'espace intérieur (16) de la moitié correspondante du tube (11) soit rempli de polymère (24).

5. Procédé selon l'une quelconque des revendications 1 à 3, **caractérisé en ce que** les tubes (11) sont des tubes (11) en forme de U dont les deux extrémités (12) se terminent dans le fond de tube (17), dans lequel une conduite (15) est insérée dans le tube (11) par l'une des extrémités de tube (12) ouvertes, puis guidée dans le tube (11) sur sensiblement 0,5 mètre jusqu'au-delà du fond de tube et ensuite le polymère (24) est pressé dans le tube (11) à travers la conduite (15), dans lequel la conduite (15) est retirée du tube (11) lors de l'enfoncement du polymère (24) jusqu'à ce que la section correspondante du tube (11) soit remplie de polymère (24).

6. Procédé selon la revendication 4 ou 5, **caractérisé en ce que**, simultanément ou ultérieurement à l'enfoncement du polymère (24) dans la moitié correspondante ou la section correspondante du tube en forme de U (11), la seconde moitié ou la seconde section du tube (11) est remplie de polymère (24) par la seconde extrémité de tube (12) ouverte, d'une manière analogue.

7. Procédé selon l'une quelconque des revendications précédentes, **caractérisé en ce que** tous les tubes (11) non fermés avec des bouchons (13) sont décontaminés avant l'ouverture des tubes (11) fermés, notamment avec des procédés de nettoyage mécanique ou chimique, par exemple par des procédés abrasifs, tels que des procédés de grenaillage, ou par des procédés de rinçage avec des solvants.

8. Procédé selon l'une quelconque des revendications précédentes, **caractérisé en ce que** les ouvertures (14) sont pratiquées dans les bouchons (13) par perçage, en particulier au moyen d'un procédé de perçage en deux étapes, afin d'éviter les pièces détachées.

9. Procédé selon l'une quelconque des revendications précédentes, **caractérisé en ce que**, lors de la séparation des tubes (11) munis du polymère (24), les tubes (11) ouverts non munis de bouchons (13) sont également séparés, puis les tubes (11) munis du polymère (24) sont triés.

10. Procédé selon l'une quelconque des revendications 3 à 11, **caractérisé en ce que** les tubes (11) munis de polymère (24) et/ou les tubes (11) ouverts non munis de bouchons (13) sont séparés directement sur ou à proximité du fond de tube (17) ou à hauteur du fond de tube (17), en particulier par sciage, dans lequel la séparation s'effectue le long d'une ligne de séparation (A) prévue, laquelle est de préférence prévue perpendiculairement aux tubes (11) placés verticalement.

11. Procédé selon la revendication 3, selon lequel l'espace intérieur de tube (16) est entièrement rempli du polymère (24), **caractérisé en ce que** les tubes (11) entièrement remplis de polymère (24) sont segmentés en plusieurs morceaux, de préférence après avoir été séparés, dans lequel la segmentation est réalisée au moyen d'un découpage et/ou d'un sciage et/ou d'un procédé de séparation thermique.

12. Procédé selon l'une quelconque des revendications précédentes, **caractérisé en ce que** les tubes (11) séparés et triés, munis du polymère (24), sont traités et/ou éliminés en tant que déchets radioactifs, et/ou que les tubes (11) ouverts non munis de bouchons (13) sont traités et/ou éliminés après le démontage en tant que déchets moins contaminés par la radioactivité ou déchets non contaminés par la radioactivité.
